# EUROPÄISCHE PATENTANMELDUNG

(11) **EP 4 137 263 A1**
(43) Veröffentlichungstag der Anmeldung: **22.02.2023**
(21) Anmeldenummer: 21192447.7
(22) Anmeldetag: 20.08.2021
(51) Int. Cl.: B23K 26/064, B23K 26/38, B23K 26/70, G02B 7/02

(54) **HALTERUNG FÜR EIN TRANSMISSIVES OPTISCHES ELEMENT, LASERBEARBEITUNGVORRICHTUNG MIT EINER SOLCHEN HALTERUNG UND VERFAHREN ZUM VERSTELLEN DER POSITION EINES TRANSMISSIVEN OPTISCHEN ELEMENTS UNTER VERWENDUNG EINER SOLCHEN HALTERUNG**

(71) Anmelder: Bystronic Laser AG, 3362 Niederönz (CH)
(72) Erfinder: SCHWIND, Tobias, 3360 Herzogenbuchsee (CH); RICHARD, Stefan, 4914 Roggwil (CH); MUMENTHALER, Martin, 4938 Rohrbach (CH); STOFFEL, Marco, 8045 Zürich (CH)
(74) Vertreter: Patentanwälte Geyer, Fehners & Partner mbB

(57) **Zusammenfassung**

Es wird eine Halterung (100) für ein transmissives optisches Element (105) angegeben, mit einem Rahmen (110) und mit einer Fassung (120) für das transmissive optische Element (105). Die Fassung (120) ist innerhalb des Rahmens (110) mit zwei Verstellelementen (130) und mit einem zwischen den Verstellelementen (130) angeordneten Führungsstift (140) gelagert und in ihrem Abstand zu dem Rahmen (110) verstellbar. Die Verstellelemente (130) sind jeweils in dem Rahmen (110) verschwenkbar angebracht und unabhängig voneinander in ihrer jeweiligen Länge verstellbar. Die fassungsseitigen Enden (132) der Verstellelemente (130) sind jeweils in der Fassung (120) verschwenkbar und in Längsrichtung des jeweiligen Verstellelements (130) verschieblich angebracht. Das fassungsseitige Ende (142) des Führungsstifts (140) ist an der Fassung (120) befestigt und das rahmenseitige Ende (144) des Führungsstifts ist in dem Rahmen (110) in X-und Y-Richtung verschwenkbar und in Längsrichtung des Führungsstifts (140) verschieblich angebracht. Es wird ferner ein Verfahren zum Verstellen der Position eines transmissiven optischen Elements (105) angegeben.

## Beschreibung

Die Erfindung betrifft eine Halterung für ein transmissives optisches Element einer Laserbearbeitungsvorrichtung, eine Verwendung derselben, eine Laserbearbeitungsvorrichtung, ein Verfahren zum Verstellen der Position eines transmissiven optischen Elements einer Laserbearbeitungsvorrichtung und ein Computerprogrammprodukt.

In Laserbearbeitungsvorrichtungen gibt es Halterungen für transmissive optische Elemente mit Verstellmechanismen, die Linearführungen enthalten. Linearführungen ermöglichen zwar eine genaue Verstellung der optischen Elemente, sind jedoch teuer und verschleissanfällig. Andere Verstellmechanismen bewirken eine nicht reproduzierbare und ungenaue Verstellung. Bewegliche Komponenten bekannter Verstellmechanismen sind ferner anfällig für Materialabrieb.

Aufgabe ist es, eine Halterung für ein transmissives optisches Element anzugeben, die eine verschleißarme, reproduzierbare und genaue Verstellung des optischen Elements ermöglicht.

Diese Aufgabe wird gelöst durch eine Halterung für ein transmissives optisches Element nach Anspruch 1, eine Verwendung einer Halterung nach Anspruch 12, eine Laserbearbeitungsvorrichtung zur Laserbearbeitung eines Werkstücks nach Anspruch 13 und ein Verfahren zum Verstellen der Position eines transmissiven optischen Elements nach Anspruch 14.

Eine Ausführungsform betrifft eine Halterung für ein transmissives optisches Element einer Laserbearbeitungsvorrichtung, mit einem Rahmen, zur Aufnahme in einer Laserstrahlführungseinheit der Laserbearbeitungsvorrichtung, und mit einer Fassung für das transmissive optische Element, wobei das transmissive optische Element eine Ebene in einer X-Richtung und einer Y-Richtung aufspannt, wobei die Fassung innerhalb des Rahmens mit zwei in oder parallel zur Ebene in einem Winkel von 80° bis 100° zueinander versetzten Verstellelementen und mit einem in oder parallel zur Ebene zwischen, insbesondere mittig zwischen, beiden Verstellelementen radial zur Fassung angeordneten Führungsstift gelagert ist und in der X-Richtung und/oder der Y-Richtung jeweils in ihrem Abstand zu dem Rahmen verstellbar ist; wobei die Verstellelemente jeweils in dem Rahmen in X- und Y-Richtung verschwenkbar angebracht sind und unabhängig voneinander in ihrer jeweiligen Länge zwischen Fassung und Rahmen verstellbar sind; die fassungsseitigen Enden der Verstellelemente jeweils in der Fassung in X- und Y-Richtung verschwenkbar und in Längsrichtung des jeweiligen Verstellelements verschieblich angebracht sind; das fassungsseitige Ende des Führungsstifts an der Fassung befestigt ist; und das rahmenseitige Ende des Führungsstifts in dem Rahmen in X- und Y-Richtung verschwenkbar und in Längsrichtung des Führungsstifts verschieblich angebracht ist.

Durch Verstellen der Länge mindestens eines der Verstellelemente kann die Position der Fassung innerhalb des Rahmens in X-Richtung und/oder Y-Richtung verändert werden. Dabei können die Verstellelemente in dem Rahmen verschwenkt werden. Ferner können die fassungsseitigen Enden der Verstellelemente und das rahmenseitige Ende des Führungsstifts in der Ebene in X- und/oder Y-Richtung verschwenkt werden, beispielweise jeweils auf Kreisbahnsegmenten. Zudem können die fassungsseitigen Enden der Verstellelemente jeweils in deren Längsrichtung in der Fassung verschoben werden. Des Weiteren kann das rahmenseitige Ende des Führungsstifts in dessen Längsrichtung in dem Rahmen verschoben werden. Dies bewirkt eine stabile Lagerung der Fassung in dem Rahmen, während eine Vielzahl von Positionen der Fassung innerhalb oder parallel zu der Ebene erreichbar ist. Letzteres wird dadurch gefördert, dass die Verstellelemente unabhängig voneinander in ihrer Länge verstellt werden können. Die Halterung ermöglicht so eine genaue und reproduzierbare Verstellung der Fassung in X-Richtung und in Y-Richtung. Ist in der Fassung ein transmissives optisches Element für einen Laserstrahl vorgesehen und ist die Halterung in einer Laserstrahlführungseinheit angeordnet, kann das transmissive optische Element in dem Strahlengang des Laserstrahls in einem Winkel, z.B. senkrecht, zu der Ausbreitungsrichtung des Laserstrahls verstellt werden. Beispielsweise kann das optische Element im Strahlengang des Laserstrahls genau zentriert werden, wobei die optische Achse des optischen Elements mit der zentralen Achse des Laserstrahls im Wesentlichen in Übereinstimmung gebracht werden kann. Die Halterung benötigt keine Linearführungen, um das optische Element zu bewegen. Der in der Halterung realisierte Verstellmechanismus ist verschleißarm, voll bestimmt bzw. sehr genau justierbar und ermöglicht eine quasilineare Positionsänderung des optischen Elements. So ist eine genaue Verstellung der Position des transmissiven optischen Elements ohne teure Linearführungen möglich.

Der Rahmen kann zwei Durchgangsöffnungen zur Aufnahme der Verstellelemente aufweisen und die Verstellelemente können in der jeweiligen Durchgangsöffnung zum Verschwenken in X- und Y-Richtung gelagert, insbesondere elastisch, gelagert sein. Die Fassung kann auf ihrer Außenseite eine erste Ausnehmung und eine zweite Ausnehmung zur Aufnahme des fassungsseitigen Endes der Verstellelemente aufweisen, wobei die erste und die zweite Ausnehmung komplementär zu den Durchgangsöffnungen angeordnet sind. Auf diese Weise wird eine Passgenauigkeit der Komponenten der Halterung erzielt. Wird die Fassung über die Verstellelemente mit dem Rahmen verbunden, werden Freiheitsgrade der Verstellelemente und damit der Fassung in X-und Y-Richtung ermöglicht. Diese Lagerung der Fassung innerhalb des Rahmens ermöglicht ferner eine hohe Stabilität der Halterung bei schnellen Bewegungen der Laserstrahlführungseinheit, insbesondere bei einer elastischen Lagerung der Verstellelemente.

Die Durchgangsöffnungen des Rahmens können um 90° versetzt angeordnet sein und die erste Ausnehmung und die zweite Ausnehmung der Fassung können um 90° versetzt angeordnet sein. Die resultierende räumliche Anordnung der Verstellelemente, wenn sie den Rahmen und die Fassung verbinden, ermöglicht eine hohe Anzahl erreichbarer Positionen der Fassung innerhalb des Rahmens.

Der Rahmen kann auf seiner Innenseite eine dritte Ausnehmung zur Aufnahme des rahmenseitigen Endes des Führungsstifts aufweisen, und das fassungsseitige Ende des Führungsstifts kann an der Außenseite der Fassung in einer zur dritten Ausnehmung komplementären Position befestigt sein. Diese Konfiguration fördert eine hohe Stabilität der Halterung bei schnellen Bewegungen der Laserstrahlführungseinheit.

Die dritte Ausnehmung kann zwischen den Durchgangsöffnungen des Rahmens angeordnet sein. Die dritte Ausnehmung kann mittig zwischen den Durchgangsöffnungen des Rahmens angeordnet sein. Der Führungsstift kann zwischen der ersten und der zweiten Ausnehmung der Fassung befestigt sein. Der Führungsstift kann mittig zwischen der ersten und der zweiten Ausnehmung der Fassung befestigt sein. Diese räumlichen Anordnungen fördern die Stabilität der Halterung bei Bewegungen der Laserstrahlführungseinheit und eine hohe Anzahl erreichbarer Positionen der Fassung innerhalb des Rahmens.

Mindestens eine der ersten Ausnehmung und der zweiten Ausnehmung kann innerhalb der Fassung in X- und Y-Richtung scheibenförmig ausgebildet sein. Dadurch werden Freiheitsgrade der Verstellelemente und damit der Fassung in X-und Y-Richtung ermöglicht, während Freiheitsgrade senkrecht zur Ebene in X-und Y-Richtung, d.h. in Z-Richtung, vermieden werden. Mindestens eine der ersten Ausnehmung und der zweiten Ausnehmung kann ein scheibenförmiges, innerhalb der jeweiligen Ausnehmung in X- und Y-Richtung im Kreis drehbares erstes Füllelement aufweisen. Das erste Füllelement kann eine erste Führung zur Aufnahme des fassungsseitigen Endes eines der Verstellelemente aufweisen. Mit diesen Abwandlungen wird die Passgenauigkeit der Komponenten der Halterung sowie deren Stabilität gefördert. Gleichzeitig wird Verschleiß, z.B. ein Materialabrieb in Kontakt stehender oder in Kontakt kommender, beweglicher Komponenten, vermieden.

Die dritte Ausnehmung kann innerhalb des Rahmens in X- und Y-Richtung scheibenförmig ausgebildet sein. Dadurch werden Freiheitsgrade des Führungsstifts und damit der Fassung in X-und Y-Richtung ermöglicht, während Freiheitsgrade senkrecht zur Ebene in X-und Y-Richtung, d.h. in Z-Richtung, vermieden werden. Ferner kann die dritte Ausnehmung ein scheibenförmiges, innerhalb der dritten Ausnehmung in X- und Y-Richtung im Kreis drehbares zweites Füllelement aufweisen. Das zweite Füllelement kann eine zweite Führung zur Aufnahme des rahmenseitigen Endes des Führungsstifts aufweisen. Auf diese Weise wird die Passgenauigkeit der Komponenten der Halterung gefördert. Diese Abwandlungen fördert ferner eine hohe Stabilität der Halterung bei schnellen Bewegungen der Laserstrahlführungseinheit. Gleichzeitig wird Verschleiß, z.B. ein Materialabrieb in Kontakt stehender oder in Kontakt kommender, beweglicher Komponenten, vermieden.

Mindestens eine der ersten Ausnehmung und der zweiten Ausnehmung kann eine Öffnung zur Außenseite der Fassung aufweisen, die einen im Vergleich zu einem Durchmesser der jeweiligen Ausnehmung kleineren Durchmesser besitzt. Ferner kann die dritte Ausnehmung eine Öffnung zur Innenseite des Rahmens aufweisen, die einen im Vergleich zu einem Durchmesser der dritten Ausnehmung kleineren Durchmesser besitzt. Damit wird die Stabilität der Halterung bei schnellen Bewegungen der Laserstrahlführungseinheit gefördert.

Das transmissive optische Element kann in der Fassung vorgesehen sein. Ferner kann das transmissive optische Element mindestens ein Element sein ausgewählt aus einem optischen Element, einem Strahlteiler, einer Phasenplatte, einem optischen Filter, einem optischen Gitter, einer Linse, einer Blende und einem Schutzglas. Das transmissive optische Element kann mittels der Halterung in einen Strahlengang der Laserstrahlbearbeitungsvorrichtung und/oder innerhalb eines Strahlengangs der Laserstrahlbearbeitungsvorrichtung positionierbar sein.

Für mindestens eines der Verstellelemente kann eine Durchführung vorgesehen sein, die im Rahmen, insbesondere in einer der Durchgangsöffnungen des Rahmens, befestigt ist. Ferner kann in mindestens einer der Durchgangsöffnungen und/oder der zugehörigen Durchführung ein seitlich elastisches Federelement vorgesehen sein, innerhalb dessen das Verstellelement in X-und Y-Richtung elastisch gelagert ist. Diese elastische Lagerung der Fassung innerhalb des Rahmens fördert eine hohe Stabilität der Halterung bei schnellen Bewegungen der Laserstrahlführungseinheit. Mindestens eines der Verstellelemente kann eine Schraubenhülse mit Innengewinde und eine Schraube mit zu dem Innengewinde komplementären Außengewinde aufweisen, wobei das Außengewinde der Schraube in dem Innengewinde der Schraubenhülse zum Verstellen des Verstellelements drehbar ist. Durch drehen der Schraube kann die Länge des betreffenden Verstellelements verändert werden.

Mindestens ein Element ausgewählt aus dem transmissiven optischen Element, der Fassung, den Verstellelementen, dem Führungsstift, der Durchführung, dem Federelement, der Schraubenhülse, der Schraube, dem ersten Füllelement und dem zweiten Füllelement kann auswechselbar sein. Dies fördert eine Wartung oder Reparatur der Halterung. Ferner kann mindestens eines der Verstellelemente, insbesondere deren Schraube, mit einem ansteuerbaren Antrieb verstellbar ausgebildet sein. Mindestens eines der Verstellelemente, insbesondere deren Schraube, kann mit einem ansteuerbaren Antrieb zum Verstellen des Verstellelements versehen sein. Durch Vorsehen des ansteuerbaren Antriebs kann ein automatischer Zentriermechanismus realisiert werden, der beispielsweise über eine Steuerungseinheit der Laserbearbeitungsvorrichtung gesteuert wird.

Eine weitere Ausführungsform betrifft eine Verwendung einer Halterung nach einer der vorstehenden Ausführungsformen und Abwandlungen zum Halten eines transmissiven optischen Elements einer Laserbearbeitungsvorrichtung und Verstellen der Position des transmissiven optischen Elements in der X- und/oder Y-Richtung, insbesondere zum Verstellen der Position in einem Winkel zur Ausbreitungsrichtung des zu führenden Laserstrahls der Laserbearbeitungsvorrichtung.

Eine andere Ausführungsform betrifft eine Laserbearbeitungsvorrichtung zur Laserbearbeitung eines Werkstücks, insbesondere Laserbearbeitungskopf, mit einer Halterung für ein transmissives optisches Element nach einer der vorstehenden Ausführungsformen und Abwandlungen. Dabei kann der Rahmen der Halterung in eine Laserstrahlführungseinheit der Laserbearbeitungsvorrichtung integriert sein. Ferner kann ein in der Fassung der Halterung vorgesehenes transmissives optisches Element in einem Strahlengang der Laserbearbeitungsvorrichtung positioniert sein.

Eine Ausführungsform betrifft ein Verfahren zum Verstellen der Position eines transmissiven optischen Elements einer Laserbearbeitungsvorrichtung, insbesondere einer Laserbearbeitungsvorrichtung nach der vorstehenden Ausführungsform, wobei das transmissive optische Element in einer Halterung nach einer der vorstehenden Ausführungsformen und Abwandlungen vorgesehen ist, und wobei die Position des transmissiven optischen Elements in der X- und/oder Y-Richtung, insbesondere in einem Winkel zur Ausbreitungsrichtung des zu führenden Laserstrahls der Laserbearbeitungsvorrichtung, verstellt wird durch Verstellen mindestens eines der Verstellelemente.

Mit den vorstehenden Ausführungsformen des Verfahrens zum Verstellen der Position eines transmissiven optischen Elements einer Laserbearbeitungsvorrichtung können die gleichen Vorteile und Funktionen realisiert werden, wie mit den Ausführungsformen der Halterung für ein transmissives optisches Element einer Laserbearbeitungsvorrichtung, insbesondere mit gleichlautenden und/oder analogen Merkmalen.

Eine weitere Ausführungsform betrifft ein Computerprogrammprodukt, umfassend ein oder mehrere Programmmodule, die bewirken, dass die Laserbearbeitungsvorrichtung nach der vorstehenden Ausführungsform Schritte des Verfahrens nach der vorstehenden Ausführungsform ausführt, insbesondere wenn die Programmmodule in einen Speicher der Laserbearbeitungsvorrichtung geladen werden

Weitere Merkmale und Zweckmäßigkeiten ergeben sich aus der folgenden Beschreibung von Ausführungsbeispielen, den Figuren und den Unteransprüchen. Die vorstehend genannten und die nachstehend erläuterten Merkmale können nicht nur in den angegebenen Kombinationen, sondern auch in anderen Kombinationen oder in Alleinstellung einsetzbar sein, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch eine Halterung gemäß eines ersten Ausführungsbeispiels;
- Fig. 2: schematisch die Halterung des ersten Ausführungsbeispiels mit verstellter Fassung;
- Fig. 3: schematisch eine Laserbearbeitungsvorrichtung mit integrierter Halterung des ersten Ausführungsbeispiels; und
- Fig. 4: schematisch eine Halterung gemäß eines zweiten Ausführungsbeispiels.

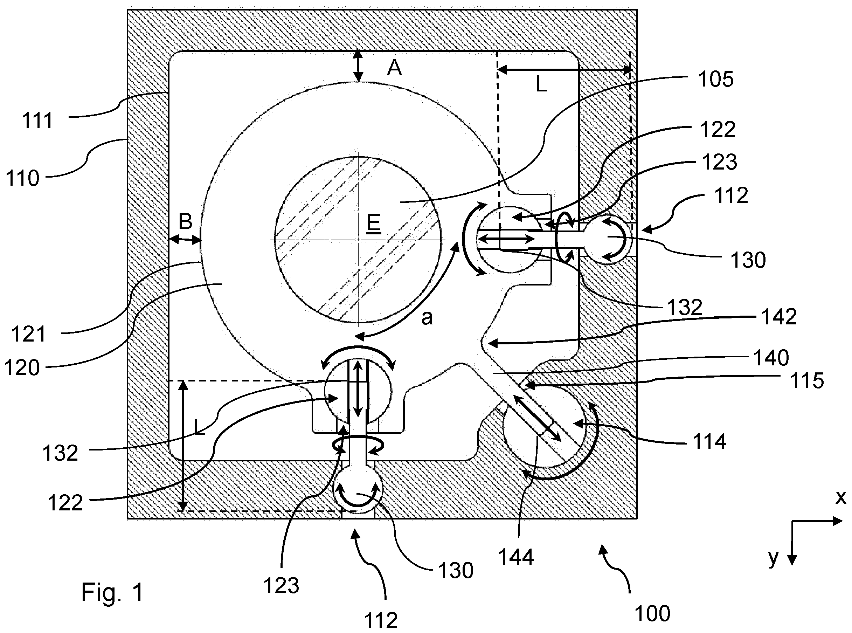

Fig. 1 zeigt schematisch eine Halterung 100 für ein transmissives optisches Element 105, auch optisches Element genannt, eines ersten Beispiels. Das transmissive optische Element 105, beispielsweise eine Linse, spannt eine Ebene E in einer X-Richtung und in einer Y-Richtung auf.

Die Halterung 100 besitzt einen Rahmen 110 und eine Fassung 120 für das transmissive optische Element. Die Fassung 120 ist innerhalb des Rahmens 110 mit zwei Verstellelementen 130 und mit einem zwischen den Verstellelementen 130 angeordneten Führungsstift 140 gelagert. Zwischen der Innenseite 111 des Rahmens 110 und der Außenseite 121 der Fassung 120 sind Abstände A und B vorhanden. Im vorliegenden Beispiel sind die Außenseite des Rahmens 110 quadratisch und die Innenseite der Fassung 120, die zur Aufnahme des optischen Elements 105 dient, kreisrund geformt. In weiteren Beispielen können andere Formen des Rahmens 110 und der Fassung 120 gewählt werden.

Im vorliegenden Beispiel sind die Verstellelemente 130 als Stellschauben (nicht gezeigt) und der Führungsstift 140 als Zylinderstift ausgebildet. Jede Stellschraube besteht aus einer Schraubenhülse mit Innengewinde und einer Schraube mit zu dem Innengewinde komplementären Außengewinde, wobei das Außengewinde der Schraube in dem Innengewinde der Schraubenhülse zum Verstellen des Verstellelements 130 drehbar ist. Die Verstellelemente 130 sind unabhängig voneinander in ihrer jeweiligen Länge L verstellbar. Die verstellte Länge L kann erfasst und gespeichert werden, um die Reproduzierbarkeit der Positionsänderungen zu unterstützen.

Der Rahmen 110 besitzt Durchgangsöffnungen 112, die in einem Winkel a versetzt angeordnet sind. Im vorliegenden Beispiel ist als der Winkel a ein 90°-Winkel vorgesehen. In den Durchgangsöffnungen 112 sind die Verstellelemente 130 radial zur Fassung 120 angeordnet. Die Verstellelemente 130 besitzen innerhalb der Durchgangsöffnungen 112 einen seitlichen Spielraum und sind dadurch innerhalb der Durchgangsöffnungen 112 verschwenkbar. Dies ermöglicht, dass das fassungseitige Ende 132 jedes Verstellelements 130 auf einem Kreisbahnsegment verschwenkt werden kann.

Ferner ist im Rahmen 110 mittig zwischen den Durchgangsöffnungen 112 eine in X- und Y-Richtung scheibenförmige Ausnehmung 114 vorgesehen. Die scheibenförmige Ausnehmung 114 besitzt eine Öffnung 115 zur Innenseite des Rahmens 110. In der Ausnehmung 114 ist das rahmenseitige Ende 144 des Führungsstifts 140 passgenau und in X-und Y-Richtung verschwenkbar angeordnet. Zudem ist das rahmenseitige Ende 144 des Führungsstifts 140 in der Ausnehmung 114 in Längsrichtung des Führungsstifts verschieblich.

Die Fassung 120 besitzt zwei um 90° versetzt angeordnete, in X- und Y-Richtung scheibenförmige Ausnehmungen 122. Die Ausnehmungen 122 sind zu den Durchgangsöffnungen 122 des Rahmens komplementär positioniert. Die scheibenförmigen Ausnehmung 122 besitzen jeweils eine Öffnung 123 zur Außenseite der Fassung 120. In den Ausnehmungen 122 sind die fassungsseitigen Enden 132 der Verstellelemente 130 passgenau und auf Kreisbahnsegmenten in X-und Y-Richtung verschwenkbar angeordnet. Ferner sind die fassungsseitigen Enden 132 der Verstellelemente 130 in den Ausnehmungen 122 in Längsrichtung des jeweiligen Verstellelements verschieblich vorgesehen. Des Weiteren ist der Führungsstift 140 mit seinem fassungsseitigen Ende 142 an der Außenseite der Fassung 120 mittig zwischen den Ausnehmungen 122 befestigt.

Die Öffnungen 123 der Ausnehmungen 122 zur Außenseite der Fassung 120 und die Öffnung 115 der Ausnehmung 114 zur Innenseite des Rahmens 110 besitzen im vorliegenden Beispiel einen im Vergleich zu dem maximalen Durchmesser der jeweiligen Ausnehmung kleineren Durchmesser. Dadurch werden die Auslenkungen der Verstellelemente 130 und des Führungsstifts 140 in X- und Y-Richtung begrenzt.

Die jeweiligen Längen L der Verstellelemente 130, die Länge des Führungsstifts 140 innerhalb der Ausnehmung 114, der jeweilige Winkel, den die Längsrichtung der Verstellelemente 130 zu einer Diagonalen des Rahmens 110 einnimmt, und der Winkel, den die Längsrichtung des Führungsstifts 140 zu der Diagonalen des Rahmens 100 einnimmt, sind über die zwei Verstellelemente 130, den Führungsstift 140 und fünf Drehpunkte veränderlich. Im vorliegenden Beispiel wird für die genannten Winkel in dem in Fig. 1 dargestellten Rahmen 110 die Diagonale von der Ecke des Rahmens rechts unten zur Ecke des Rahmens links oben als Bezugsgerade gewählt. In der in Fig. 1 dargestellten Position der Fassung beträgt der jeweilige Winkel, den die Längsrichtung der Verstellelemente 130 zur Diagonalen des Rahmens 110 einnimmt, 45°, und der Winkel, den die Längsrichtung des Führungsstifts 140 zur Diagonalen des Rahmens 100 einnimmt, beträgt 0°.

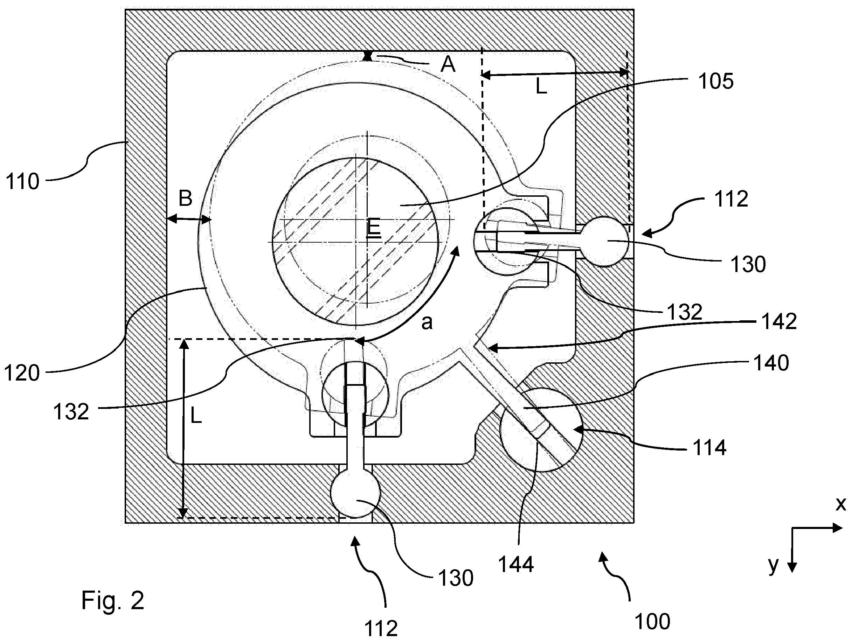

Durch Verstellen der Länge L mindestens eines der Verstellelemente 130 wird die Position der Fassung 120 innerhalb des Rahmens 110 in X-Richtung und/oder Y-Richtung verändert. Mit anderen Worten, die Abstände A und B zwischen der Fassung 120 zu dem Rahmen 110 werden verändert. Dies ist in Fig. 2 anhand der gestrichelt eingezeichneten verstellten Position des Fassung 120 erkennbar. In der in Fig. 2 gestrichelt eingezeichneten Position der Fassung 120 ist der Abstand A ausgehend von der in Fig. 1 gezeigten Position der Fassung 120 verkleinert, während der Abstand B vergrößert ist. Durch Verstellen mindestens einer der Längen L der Verstellelemente 130 werden die Länge des Führungsstifts 140 innerhalb der Ausnehmung 114, der jeweilige Winkel, den die Längsrichtung der Verstellelemente 130 zu der Diagonalen des Rahmens 110 einnimmt, und der Winkel, den die Längsrichtung des Führungsstifts 140 zu der Diagonalen des Rahmens 100 einnimmt, verändert. Da die Längen L der Verstellelemente 130 unabhängig voneinander verstellt werden können, lässt sich mit der optischen Achse des optischen Elements 105 nahezu jeder beliebige Punkt im Bereich um das Zentrum des Rahmens 110 anfahren. Der Verstellmechanismus der Halterung 100 ist zudem genau justierbar.

Um die Fassung 120 aus der Position der Fig. 1 in die in Fig. 2 gestrichelt dargestellte Position zu verstellen, werden die Verstellelemente 130 verlängert. Die fassungsseitigen Enden 132 der Verstellelemente 130 werden in deren Längsrichtung in den Ausnehmungen 122 der Fassung 120 verschoben. Dabei werden die Verstellelemente 130 in den Ausnehmungen 122 des Rahmens 110 verschwenkt. Die fassungsseitigen Enden 132 der Verstellelemente 130 und das rahmenseitige Ende 144 des Führungsstifts 140 werden in oder parallel zu der Ebene E in X-und/oder Y-Richtung jeweils auf Kreisbahnsegmenten verschwenkt. Zudem wird das rahmenseitige Ende 144 des Führungsstifts 140 in dessen Längsrichtung in der Ausnehmung 114 des Rahmens 110 verschoben. Die verstellten Längen L werden erfasst und gespeichert, um die Positionsänderungen der Fassung 120 reproduzierbar zu halten. Auf diese Weise wird die in Fig. 2 gestrichelt eingezeichnete Position der Fassung 120 genau, reproduzierbar und im Wesentlichen ohne Materialabrieb eingestellt, während die Fassung in dem Rahmen stabil gelagert bleibt.

Die Halterung 100 ermöglicht eine stabile Lagerung der Fassung 120 in dem Rahmen 110, während eine Vielzahl von Positionen der Fassung 120 in oder parallel zu der Ebene E, d.h. in X- und/oder Y-Richtung, erreichbar ist. Letzteres wird dadurch gefördert, dass die Verstellelemente 130 unabhängig voneinander in ihrer Länge L verstellbar sind. Die Halterung ermöglicht so eine genaue und reproduzierbare Verstellung der Fassung in X-Richtung und in Y-Richtung.

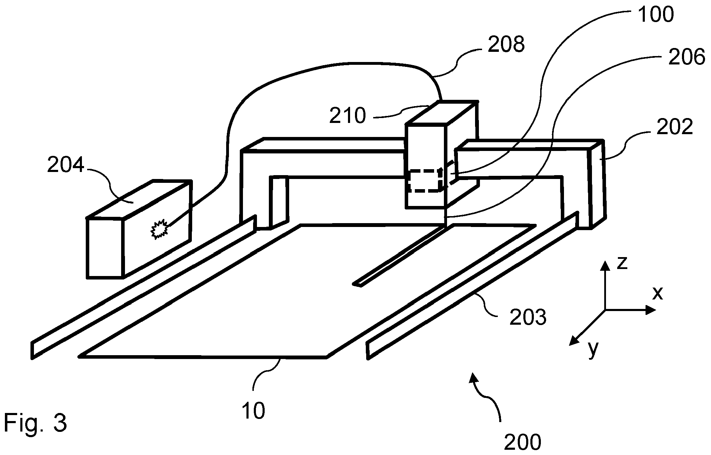

Fig. 3 zeigt schematisch eine Laserbearbeitungsvorrichtung 200 eines Beispiels, die als Laserschneidvorrichtung mit einem Schneidkopf 210 ausgebildet ist. Die Vorrichtung 200 besitzt eine Laserquelle 204 zur Erzeugung eines Laserstrahls 206, der mittels einer Transportfaser 208 in einen Schneidkopf 210 geführt wird. Mit dem Schneidkopf 210 kann der Laserstrahl 206 in einer Z-Richtung auf ein Werkstück 10 gerichtet werden. Die Vorrichtung 200 beinhaltet eine Schneidkopfbewegungseinheit 202, 203, mit der der Schneidkopf 210 und somit der darin geführten Laserstrahl 206 in Schneidrichtung in X- und/oder Y-Richtung über das Werkstück 10 bewegt werden kann. Die Schneidkopfbewegungseinheit enthält eine Brücke 202, auf der der Schneidkopf 210 in X-Richtung verschiebbar angeordnet ist und einen Schlitten 203, auf der die Brücke 202 in Y-Richtung bewegt werden kann. Mit der Schneidkopfbewegungseinheit kann der Schneidkopf 210 auch senkrecht zum Werkstück 10, d.h. in Z-Richtung, bewegt werden. Die Laserbearbeitungsvorrichtung 200 besitzt im vorliegenden Beispiel eine Steuerungseinheit (nicht gezeigt) mit einem Speicher. Die Schneidkopfbewegungseinheit 202, 203 ist mit der Steuerungseinheit drahtgebunden oder drahtlos datenleitend verbunden. In den Schneidkopf 210 ist die Halterung 100 der Fig. 1 mit dem in der Fassung 120 vorgesehenen optischen Element 105 integriert. Im vorliegenden Beispiel sind die Verstellelemente 130 (in Fig. 3 nicht gezeigt) auf der Außenseite des Schneidkopfs 210 angeordnet. Die Halterung 200 ist derart positioniert, dass der im Betrieb erzeugte Laserstrahl 206 das optische Element 105 in Z-Richtung senkrecht zur Ebene E durchläuft, d.h. senkrecht zur den X- und Y-Richtungen.

Soll außerhalb des Betriebs der Laserbearbeitungsvorrichtung 200, z.B. im Rahmen einer Wartung des Schneidkopfs 210, die Position des optischen Elements 105 im Strahlengang in X-und/oder Y-Richtung verändert werden, werden die Verstellelemente 130 auf der Außenseite des Schneidkopfs manuell bedient. So wird das optische Element 105 in dem Strahlengang des Laserstrahls senkrecht zu der Ausbreitungsrichtung des Laserstrahls 206 verstellt. Beispielsweise wird das optische Element im Strahlengang des Laserstrahls 206 genau zentriert, wobei die optische Achse des optischen Elements 105 mit der zentralen Achse des Laserstrahls im Wesentlichen in Übereinstimmung gebracht wird.

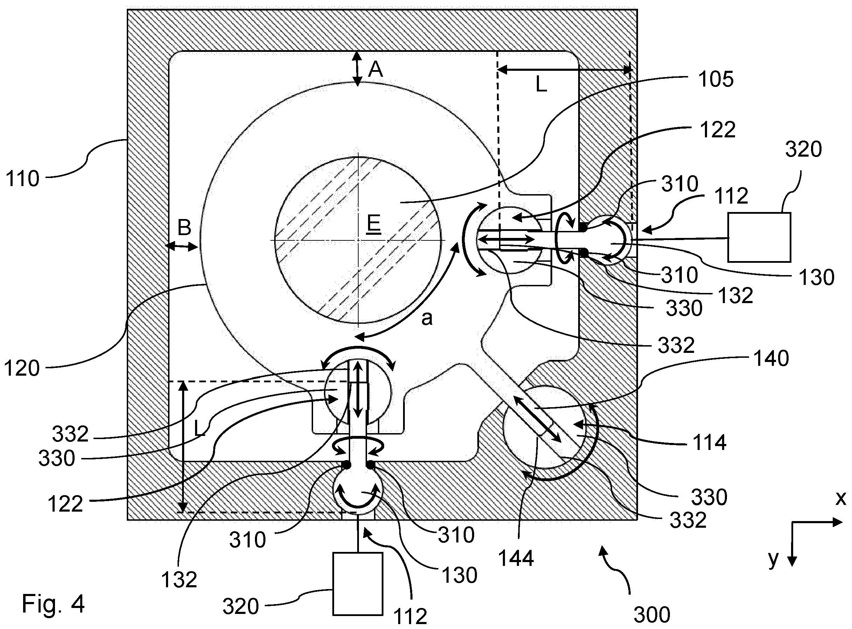

Fig. 4 stellt schematisch eine Halterung 300 als ein zweites Beispiel dar. Im Vergleich zur Halterung 100 der Fig. 1 sind in den Durchgangsöffnungen 112 der Halterung 300 zusätzlich elastische Federelemente 310 vorgesehen, innerhalb derer die Verstellelemente in X- und Y-Richtung seitlich elastisch gelagert sind. Die scheibenförmigen Ausnehmungen 122 und die Ausnehmung 114 enthalten im vorliegenden Beispiel jeweils ein passgenaues drehbares scheibenförmiges Füllelement 330 aus einem abriebarmen, temperaturbeständigen Kunststoff, das passgenau gelagert ist. Das Material des Füllelements 330 kann auch ein Metall enthalten oder daraus bestehen, z.B. Edelstahl, Aluminium oder Messing. Die Füllelemente 330 enthalten jeweils eine Führung 332 zur passgenauen Aufnahme der fassungsseitigen Enden 132 der Verstellelemente 130 bzw. zur passgenauen Aufnahme des rahmenseitigen Endes 144 des Führungsstifts 140. Innerhalb der Führungen 332 können die fassungsseitigen Enden 132 der Verstellelemente 130 bzw. das rahmenseitigen Ende 144 des Führungsstifts 140 verschoben werden. Durch diese Maßnahmen wird die Stabilität der Halterung bei schnellen Bewegungen des Schneidkopfs 210 erhöht. In weiteren Beispielen ist innerhalb der Durchgangsöffnungen 122 jeweils eine Durchführung (nicht gezeigt) zur Aufnahme der Verstellelemente 130 und/oder der elastischen Federelemente 310 befestigt.

Ferner sind die Verstellelemente 130 der Halterung 300, insbesondere deren Schraube, jeweils mit einem ansteuerbaren Antrieb verstellbar ausgebildet und mit einem ansteuerbaren Antrieb 320, z.B. einem Servo-Motor, zum Verstellen des Verstellelements 130 versehen. Ist die Halterung 300 in den Schneidkopf 210 der Laserbearbeitungsvorrichtung 200 integriert, ist der ansteuerbare Antrieb 320 mit deren Steuerungseinheit (nicht gezeigt) datenleitend drahtgebunden oder drahtlos verbunden. Mit dem ansteuerbaren Antrieb 320 wird auf diese Weise ein automatischer Verstellmechanismus, z.B. ein automatischer Zentriermechanismus, realisiert, der über die Steuerungseinheit der Laserbearbeitungsvorrichtung 200 gesteuert wird und der auch während des Betriebs der Laserbearbeitungsvorrichtung eingesetzt werden kann. Ferner kann so eine Miniaturisierung der Halterung 300 oder des gesamten Schneidkopfs 210, in den sie integriert ist, umgesetzt werden.

### Bezuaszeichenliste

- 10: Werkstück
- 100: Halterung
- 105: transmissives optisches Element
- 110: Rahmen
- 112: Durchgangsöffnung
- 114: dritte Ausnehmung
- 115: Öffnung
- 102: Fassung
- 122: erste, zweite Ausnehmung
- 123: Öffnung
- 130: Verstellelement
- 132: Fassungsseitiges Ende des Verstellelements
- 140: Führungsstift
- 142: Fassungsseitiges Ende des Führungsstifts
- 144: Rahmenseitiges Ende des Führungsstifts
- 200: Laserbearbeitungsvorrichtung
- 202: Brücke
- 203: Schlitten
- 204: Laserquelle
- 206: Laserstrahl
- 208: Transportfaser
- 210: Laserbearbeitungskopf, Schneidkopf
- 300: Halterung
- 310: Federelement
- 330: erstes, zweites Füllelement
- 332: erste, zweite Führung

## Patentansprüche

1. Halterung (100; 300) für ein transmissives optisches Element (105) einer Laserbearbeitungsvorrichtung (200),
mit
einem Rahmen (110), zur Aufnahme in einer Laserstrahlführungseinheit (210) der Laserbearbeitungsvorrichtung, und mit
einer Fassung (120) für das transmissive optische Element, wobei das transmissive optische Element eine Ebene (E) in einer X-Richtung und einer Y-Richtung aufspannt, **dadurch gekennzeichnet, dass**
die Fassung (120) innerhalb des Rahmens (110) mit zwei in oder parallel zur Ebene (E) in einem Winkel (a) von 80° bis 100° zueinander versetzten Verstellelementen (130) und mit einem in oder parallel zur Ebene (E) zwischen, insbesondere mittig zwischen, beiden Verstellelementen radial zur Fassung angeordneten Führungsstift (140) gelagert ist und in der X-Richtung und/oder der Y-Richtung jeweils in ihren Abständen (A, B) zu dem Rahmen (110) verstellbar ist; wobei
- die Verstellelemente (130) jeweils in dem Rahmen (110) in X- und Y-Richtung verschwenkbar angebracht sind und unabhängig voneinander in ihrer jeweiligen Länge (L) zwischen Fassung und Rahmen verstellbar sind;
- die fassungsseitigen Enden (132) der Verstellelemente (130) jeweils in der Fassung (120) in X- und Y-Richtung verschwenkbar und in Längsrichtung des jeweiligen Verstellelements verschieblich angebracht sind;
- das fassungsseitige Ende (142) des Führungsstifts (140) an der Fassung (120) befestigt ist; und
- das rahmenseitige Ende (144) des Führungsstifts (140) in dem Rahmen (110) in X-und Y-Richtung verschwenkbar und in Längsrichtung des Führungsstifts verschieblich angebracht ist.

2. Halterung nach Anspruch 1, wobei
der Rahmen (110) zwei Durchgangsöffnungen (112) zur Aufnahme der Verstellelemente (130) aufweist und die Verstellelemente in der jeweiligen Durchgangsöffnung zum Verschwenken in X- und Y-Richtung, insbesondere elastisch, gelagert sind, und/oder
die Fassung (120) auf ihrer Außenseite eine erste Ausnehmung (122) und eine zweite Ausnehmung (122) zur Aufnahme des fassungsseitigen Endes (132) der Verstellelemente (130) aufweist, wobei die erste und die zweite Ausnehmung komplementär zu den Durchgangsöffnungen (112) angeordnet sind.

3. Halterung nach Anspruch 2,
wobei die Durchgangsöffnungen (112) des Rahmens (110) um 90° versetzt angeordnet sind und die erste Ausnehmung und die zweite Ausnehmung (122) der Fassung (120) um 90° versetzt angeordnet sind.

4. Halterung nach einem der vorstehenden Ansprüche, wobei
der Rahmen (110) auf seiner Innenseite (111) eine dritte Ausnehmung (114) zur Aufnahme des rahmenseitigen Endes (144) des Führungsstifts (140) aufweist, und/oder das fassungsseitige Ende (142) des Führungsstifts (140) an der Außenseite (121) der Fassung (120) in einer zur dritten Ausnehmung (114) komplementären Position befestigt ist.

5. Halterung nach einem der Ansprüche 2 bis 4,
wobei die dritte Ausnehmung (114) zwischen den Durchgangsöffnungen (112) des Rahmens angeordnet ist; und/oder
wobei die dritte Ausnehmung (114) mittig zwischen den Durchgangsöffnungen des Rahmens angeordnet ist, und/oder
wobei der Führungsstift (140) zwischen der ersten und der zweiten Ausnehmung der Fassung befestigt ist; und/oder
wobei der Führungsstift mittig zwischen der ersten und der zweiten Ausnehmung der Fassung befestigt ist.

6. Halterung nach einem der Ansprüche 2 bis 5,
wobei mindestens eine der ersten Ausnehmung und der zweiten Ausnehmung (122) innerhalb der Fassung (120) in X- und Y-Richtung scheibenförmig ausgebildet ist; und/oder
wobei mindestens eine der ersten Ausnehmung und der zweiten Ausnehmung ein (122) scheibenförmiges, innerhalb der jeweiligen Ausnehmung in X- und Y-Richtung im Kreis drehbares erstes Füllelement (330) aufweist; und/oder
wobei das erste Füllelement (330) eine erste Führung (332) zur Aufnahme des fassungsseitigen Endes (142) eines der Verstellelemente aufweist.

7. Halterung nach einem der Ansprüche 4 bis 6,
wobei die dritte Ausnehmung (114) innerhalb des Rahmens (110) in X- und Y-Richtung scheibenförmig ausgebildet ist; und/oder
wobei die dritte Ausnehmung (114) ein scheibenförmiges, innerhalb der dritten Ausnehmung in X- und Y-Richtung im Kreis drehbares zweites Füllelement (330) aufweist; und/oder
wobei das zweite Füllelement (330) eine zweite Führung (332) zur Aufnahme des rahmenseitigen Endes (144) des Führungsstifts aufweist.

8. Halterung nach einem der Ansprüche 2 bis 7,
wobei mindestens eine der ersten Ausnehmung und der zweiten Ausnehmung (122) eine Öffnung (123) zur Außenseite der Fassung (120) aufweist, die einen im Vergleich zu einem Durchmesser der jeweiligen Ausnehmung kleineren Durchmesser besitzt; und/oder
wobei die dritte Ausnehmung (114) eine Öffnung (115) zur Innenseite des Rahmens (110) aufweist, die einen im Vergleich zu einem Durchmesser der dritten Ausnehmung kleineren Durchmesser besitzt.

9. Halterung nach einem der vorstehenden Ansprüche,
wobei das transmissive optische Element (105) in der Fassung vorgesehen ist, und/oder
wobei das transmissive optische Element (105) mindestens ein Element ist ausgewählt aus einem optischen Element, einem Strahlteiler, einer Phasenplatte, einem optischen Filter, einem optischen Gitter, einer Linse, einer Blende und einem Schutzglas; und/oder
wobei das transmissive optische Element (105) mittels der Halterung (100; 300) in einen Strahlengang der Laserstrahlbearbeitungsvorrichtung (200) und/oder innerhalb eines Strahlengangs der Laserstrahlbearbeitungsvorrichtung positionierbar ist.

10. Halterung nach einem der vorstehenden Ansprüche,
wobei für mindestens eines der Verstellelemente (130) eine Durchführung vorgesehen ist, die im Rahmen (110), insbesondere in einer der Durchgangsöffnungen (112) des Rahmens, befestigt ist; und/oder
wobei in mindestens einer der Durchgangsöffnungen und/oder der zugehörigen Durchführung ein seitlich elastisches Federelement (310) vorgesehen ist, innerhalb dessen das Verstellelement (130) in X- und Y-Richtung elastisch gelagert ist; und/oder
wobei mindestens eines der Verstellelemente (130) eine Schraubenhülse mit Innengewinde und eine Schraube mit zu dem Innengewinde komplementären Außengewinde aufweist, wobei das Außengewinde der Schraube in dem Innengewinde der Schraubenhülse zum Verstellen des Verstellelements drehbar ist.

11. Halterung nach einem der vorstehenden Ansprüche,
wobei mindestens ein Element ausgewählt aus dem transmissiven optischen Element (105), der Fassung (120), den Verstellelementen (130), dem Führungsstift (140), der Durchführung, dem Federelement (310), der Schraubenhülse, der Schraube, dem ersten Füllelement (330) und dem zweiten Füllelement (330) auswechselbar ist; und/oder
wobei mindestens eines der Verstellelemente, insbesondere deren Schraube, mit einem ansteuerbaren Antrieb verstellbar ausgebildet ist; und/oder
wobei mindestens eines der Verstellelemente, insbesondere deren Schraube, mit einem ansteuerbaren Antrieb zum Verstellen des Verstellelements versehen ist.

12. Verwendung einer Halterung (100; 300) nach einem der vorstehenden Ansprüche zum Halten eines transmissiven optischen Elements (105) einer Laserbearbeitungsvorrichtung (200) und Verstellen der Position des transmissiven optischen Elements in der X- und/oder Y-Richtung, insbesondere zum Verstellen der Position in einem Winkel zur Ausbreitungsrichtung des zu führenden Laserstrahls (206) der Laserbearbeitungsvorrichtung.

13. Laserbearbeitungsvorrichtung (200) zur Laserbearbeitung eines Werkstücks (10), insbesondere Laserbearbeitungskopf (210), mit einer Halterung (100; 300) für ein transmissives optisches Element (105) nach einem der Ansprüche 1 bis 11;
wobei der Rahmen (110) der Halterung in eine Laserstrahlführungseinheit der Laserbearbeitungsvorrichtung integriert ist; und/oder
wobei ein in der Fassung (120) der Halterung vorgesehenes transmissives optisches Element (105) in einem Strahlengang der Laserbearbeitungsvorrichtung positioniert ist.

14. Verfahren zum Verstellen der Position eines transmissiven optischen Elements (105) einer Laserbearbeitungsvorrichtung, insbesondere einer Laserbearbeitungsvorrichtung (200) nach Anspruch 13, wobei das transmissive optische Element in einer Halterung (100; 300) nach einem der Ansprüche 1 bis 11 vorgesehen ist, wobei die Position des transmissiven optischen Elements (105) in der X- und/oder Y-Richtung, insbesondere in einem Winkel zur Ausbreitungsrichtung des zu führenden Laserstrahls (206) der Laserbearbeitungsvorrichtung, verstellt wird durch Verstellen mindestens eines der Verstellelemente (130).

15. Computerprogrammprodukt, umfassend ein oder mehrere Programmmodule, die bewirken, dass die Laserbearbeitungsvorrichtung (200) nach Anspruch 13 Schritte des Verfahrens nach Anspruch 14 ausführt, insbesondere wenn die Programmmodule in einen Speicher der Laserbearbeitungsvorrichtung geladen werden.
